# FASCICULE DE BREVET EUROPEEN

(11) **EP 3 117 111 B1**
(45) Date de publication et mention de la délivrance du brevet: **31.10.2018**
(21) Numéro de dépôt: 15708842.8
(22) Date de dépôt: 11.03.2015
(51) Int. Cl.: F16B 31/04, B25B 29/02

(54) **LIAISON BOULONNEE**
VERBINDUNG MIT BOLZEN
BOLTED CONNECTION

(30) Priorité: 13.03.2014 FR 1452084
(43) Date de publication de la demande: 18.01.2017
(73) Titulaire: ArianeGroup SAS, 75015 Paris (FR)
(72) Inventeur: COFFINEY, Sebastien, F-33320 Eysines (FR)
(74) Mandataire: Ipside
(86) Numéro de dépôt international: PCT/EP2015/055093
(87) Numéro de publication internationale: WO 2015/135998

(56) Documents cités:
- WO-A1-95/33598
- FR-A- 1 402 242
- US-A- 3 841 193
- US-A1- 2007 166 121

## Description

### Domaine de l'invention

La présente invention concerne le domaine des liaisons boulonnées, et plus particulièrement les liaisons boulonnées de diamètre et couple de serrage important, notamment supérieur à M24, telles que celle utilisées dans les industries automobiles, ferroviaires, maritimes voire sous marin, off shore, nucléaires ou autre.

### Arrière plan technologique

Dans ces applications, on demande à la liaison un haut niveau de sécurité et de fiabilité, ce qui signifie en particulier une bonne reproductibilité et répétabilité de la tension résiduelle de serrage. Et aussi une certaine facilité et rapidité de mise en oeuvre, même et surtout en milieux et conditions environnementales difficiles, que ce soit pour des raison d'accessibilité, de corrosion, ou de rayonnement nucléaire.

On connait trois techniques de serrage de liaisons boulonnées : le serrage au couple, le serrage thermique, le serrage par traction mécanique.

Globalement, la bonne tenue d'une liaison boulonnée est directement liée à la valeur de la tension résiduelle dans la liaison après le serrage.

La méthode de serrage la plus connue, qui consiste à serrer la liaison en lui appliquant un couple sur un pas de vis, en vissant est associée à une dispersion très importante de cette tension résiduelle. Il est admis que cette dispersion est de +/- 20% dans le meilleur des cas - avec un serrage au couple bien maitrisé - mais plus généralement elle est de -/+ 60%.

Qui plus est, le serrage au couple induit des effets parasites dans les vis, par exemple des effets de torsion, qui rendent la liaison encore plus incertaine.

Egalement, le serrage au couple implique des frottements entre pas de vis, ce qui détériore peu à peu les surfaces en contact et limite la possibilité d'effectuer plusieurs serrages/desserrages successifs.

Enfin, le serrage au couple ne permet pas en général le serrage simultané de plusieurs liaisons, ce qui limite encore l'efficacité de fixation que l'on peut espérer obtenir.

De ce fait, une alternative au serrage au couple a depuis longtemps été inventée : le serrage par mise en tension, avec une première variante de serrage thermique qui joue sur des dilatations thermique et/ou différentielles. Avec toutefois toutes les contraintes associées à la mise en oeuvre de chauffages haute température qui en limitent l'utilisation.

Le serrage par mise sous tension se fait plus simplement par mise en tension mécanique du boulon.

Parmi les méthodes de mise en tension, on retiendra ici la mise sous tension par traction hydraulique qui permet la maitrise sous faible dispersion d'une tension résiduelle dans la tige par application d'effort en traction pure.

Dans le domaine de la mise en tension de tige filetée par traction pure et par usage de l'hydraulique, plusieurs moyens de mise en oeuvre existent.

Il existe en premier lieu le serrage avec tendeur hydraulique. Le tendeur est utilisé sur un boulon standard déjà monté pré-serré ou écrou au contact. Le vérin sous pression hydraulique allonge la vis, l'écrou est ramené au contact des pièces à serrer ce qui maintient l'allongement de la vis et assure la tension résiduelle dans celle-ci après relaxation.

Le vérin est ensuite démonté, seul le boulon standard reste monté. L'utilisation de ce type de technologie offre également la possibilité de serrer des liaisons de façon simultanée et donc d'obtenir une meilleure répartition des tensions dans des brides.

Il existe aussi le serrage avec écrou hydraulique. L'écrou hydraulique fonctionne selon le même principe que le tendeur hydraulique, la différence étant qu'il remplace l'écrou standard du boulon et reste donc à demeure après l'opération. En outre des études existent sur l'intégration d'un piston hydraulique à l'intérieur d'une vis afin d'en assurer son allongement. La mise au contact de l'écrou sur la vis allongée et le relâchement de la pression assure ensuite la tension résiduelle dans la vis.

On constate en fait qu'on peut trouver sur le marché de nombreux dispositifs en particulier hydrauliques permettant la mise en oeuvre du serrage par mise en tension, mais il est clair que cette mis en oeuvre peut être complexe.

Elle nécessite en effet :
- la mise en place du boulon et de l'écrou sur les pièces à assembler;
- la mise en place du tendeur hydraulique et de son alimentation hydraulique;
- la mise en tension du boulon;
- le blocage du boulon;
- le contrôle du serrage;
- le démontage du tendeur.

Le document américain US 3 841 193 A décrit par exemple un boulon hydraulique qui permet le serrage de pièces entre un écrou inférieur et un épaulement cylindrique surmonté d'un écrou supérieur, ledit épaulement formant une chambre de coulissement d'une collerette solidaire d'une tige filetée du boulon, l'ensemble collerette épaulement formant un vérin hydraulique qui permet le serrage du boulon avant le vissage de l'écrou supérieur pour bloquer la tension de serrage.

Cependant, le vissage de l'écrou de blocage de la tension peut s'avérer contraignant, principalement en raison de la difficulté d'accès à certaines installations nécessitant un tel serrage hydraulique.

Dans un environnement agressif, par exemple radioactif ou sous marin profond ou pour de simples raisons économiques, on voudra réduire ces temps de mise en oeuvre, voire automatiser les serrages et desserrages quand il y a besoin d'assembler et désassembler plusieurs fois.

### Brève description de l'invention

La présente invention porte donc sur un dispositif intégré d'assemblage de type par boulon à mise en oeuvre en tension, qui permette une simplification des opérations qui doivent être réalisée par les opérateurs, tout assurant la qualité et la maitrise de l'assemblage.

Le principe de l'invention consiste à intégrer un vérin hydraulique à demeure dans un boulon à serrer.

Un dispositif d'épaulement par exemple réalisé avec un écrou est fixé à l'extrémité du boulon opposée à celle portant le vérin hydraulique.

Plus précisément la présente invention propose un boulon d'assemblage et de serrage à mise en oeuvre en tension selon la revendication 1, comportant une tige et une tête dont la tête, située à une première extrémité de la tige, est pourvue d'un moyen de mise en tension de serrage à vérin hydraulique monté à demeure sur le boulon, le serrage se faisant entre un dispositif d'épaulement arrière et le vérin hydraulique, le dispositif d'épaulement arrière étant disposé à une seconde extrémité de la tige.

Le vérin comporte un cylindre en regard du dispositif d'épaulement arrière, le serrage de pièces se faisant entre une face arrière annulaire du cylindre et le dispositif d'épaulement arrière.

Le boulon comporte un dispositif de blocage de la tension de serrage une fois le vérin du moyen de mise en tension actionné.

Le dispositif d'épaulement comporte préférablement au moins un écrou d'arrêt, la tige étant pourvue d'un filetage de réception dudit écrou d'arrêt sur une partie d'au moins ladite seconde extrémité.

La tête comporte avantageusement une surface d'appui d'un moyen de desserrage du boulon.

Le vérin peut notamment comporter un piston formé par une collerette sur la tige.

Le vérin peut comporter une alimentation hydraulique débouchant dans une face du piston en regard d'une face interne du cylindre entourée par une première jupe entourant elle même de manière étanche le piston.

Avantageusement le cylindre comporte un corps de cylindre annulaire monté coulissant sur la tige et muni de moyens d'étanchéité entre la tige et le cylindre.

Des ressorts de rappel du cylindre sont préférablement disposés entre un flasque vissé sur la tige et une face arrière du corps de cylindre.

La face arrière du cylindre peut être annulaire et constituée par l'extrémité libre d'une second jupe partant du corps de cylindre et entourant les ressorts.

Le moyen de mise en tension de serrage à vérin hydraulique est avantageusement relié à une tuyauterie d'une source hydraulique au moyen de raccords montés sur des tourelles rotatives qui permettent de déplacer le boulon en rotation tout en conservant la tuyauterie dans la même orientation.

Les tourelles sont avantageusement disposées selon un axe longitudinal perpendiculaire au corps du boulon et libres en rotation autour de leur axe longitudinal alors que les raccords sont eux mêmes orientés à 90°de l'axe des tourelles ce qui permet d'orienter les raccords angulairement par rapport à l'axe du boulon.

La tête comporte avantageusement une zone de prise angulaire qui permet avec des écrous au niveau de l'épaulement arrière de desserrer le boulon manuellement.

Le boulon comporte des moyens d'accouplement débrayables entre le dispositif de blocage de la tension et une bague d'entrainement de ce dispositif, lesdits moyens étant conçus pour permettre à la bague d'entraîner le dispositif en l'absence d'effort résistant.

L'invention concerne en outre un dispositif d'assemblage pour lequel le boulon est avantageusement reçu dans un premier support à rainures permettant une rotation du boulon et une translation du boulon parallèlement à lui même.

Le dispositif d'assemblage comporte éventuellement un deuxième support d'accrochage temporaire du boulon dans une position d'attente.

Il peut comporter un troisième support de type pince ressort retenant le boulon dans une position de mise en oeuvre.

L'invention prévoit en outre un système d'assemblage comportant une pluralité de dispositifs d'assemblage selon l'invention et pour lequel les boulons des dispositifs d'assemblage sont reliés par groupes alternés à des sources de pression séparées.

L'invention prévoit enfin un procédé d'assemblage de pièces au moyen d'au moins d'un boulon de l'invention et pour lequel
- on règle une distance D entre la tête de boulon et le dispositif d'épaulement arrière,
- on met en place le boulon
- on met le boulon sous pression hydraulique en sorte de serrer les pièces à fixer entre la tête et le dispositif d'épaulement arrière;
- on bloque mécaniquement le boulon par serrage d'un dispositif de blocage de la tension de serrage.

Le dispositif comportant un repère de correct serrage, on tourne une bague du dispositif de blocage de la tension de serrage jusqu'à apparition dudit repère.

### Brève description des dessins:

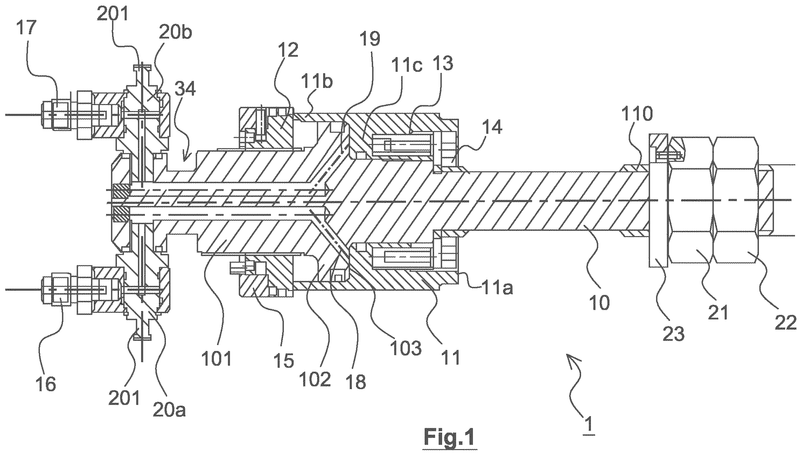

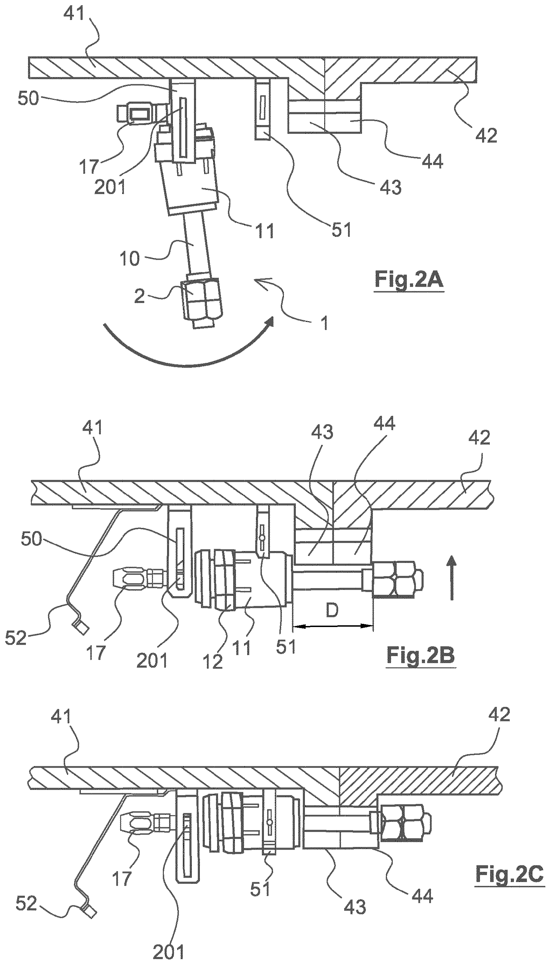

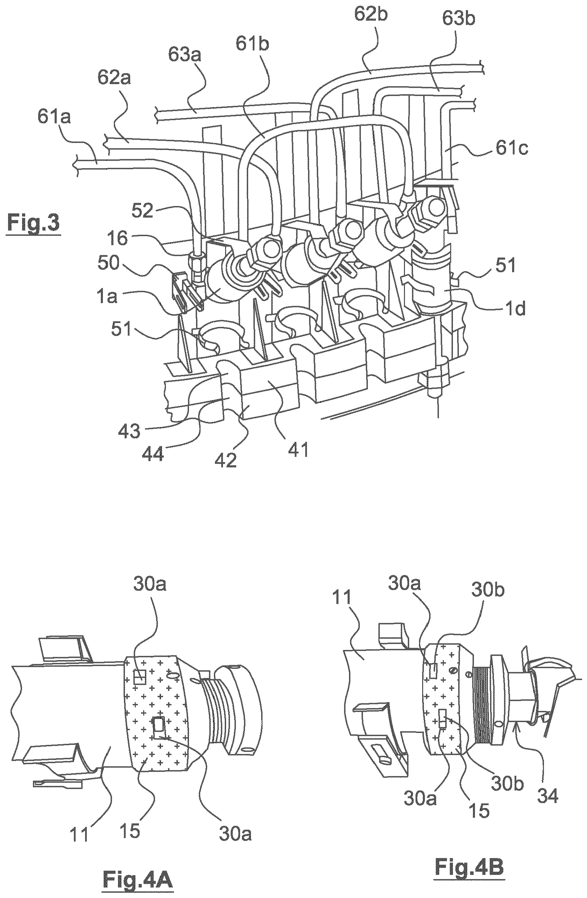

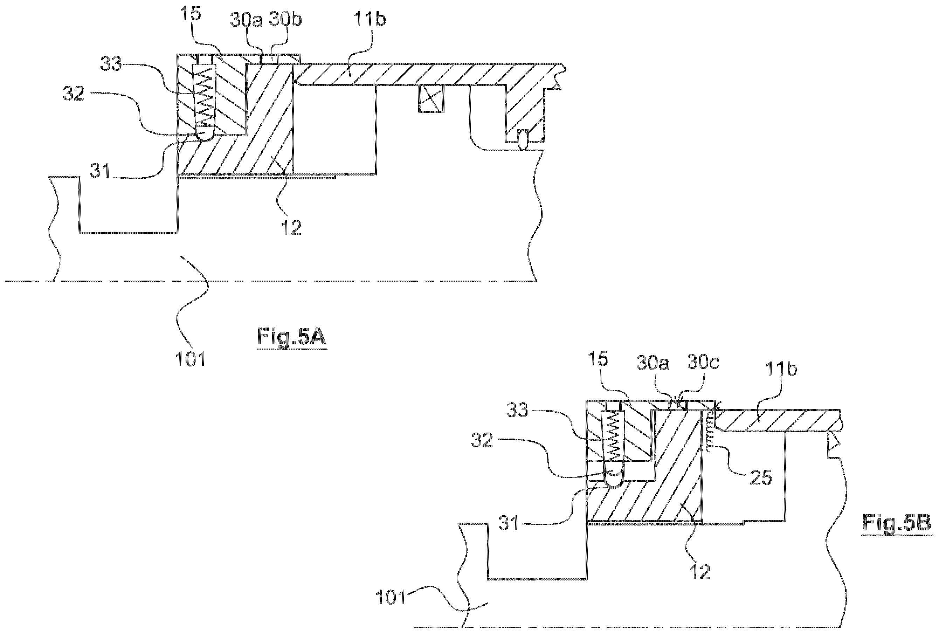

D'autres caractéristiques et avantages de l'invention seront apparents à la lecture de la description qui suit d'un exemple non limitatif de réalisation de l'invention en référence aux dessins qui représentent:
En figure 1: une vue de côté d'une coupe longitudinale d'un boulon selon l'invention;
aux figures 2A, 2B, 2C: des vues de côté d'un dispositif d'assemblage selon trois positions conformément à l'invention;
en figure 3: une vue partielle d'un système d'assemblage de l'invention et de pièces assemblées au moyen d'un tel système;
aux figures 4A et 4B: deux vues de côté d'un détail de réalisation d'un boulon selon un mode de réalisation particulier de l'invention;
aux figures 5A et 5B: deux vues en coupe d'un détail d'un dispositif de contrôle et de visualisation de bonne position du boulon de l'invention.

### Description détaillée de modes de réalisation de l'invention

La figure 1 représente un dispositif intégré d'assemblage de type par boulon à mise en oeuvre en tension de l'invention qui permette une simplification des opérations qui doivent être réalisée par les opérateurs pour le serrage de pièces avec le boulon tout assurant la qualité et la maitrise de l'assemblage.

Le dispositif constitue un boulon hydraulique 1 qui comporte une tige 10 comportant une première extrémité sur laquelle est disposé un cylindre 11 de vérin retenu par un flasque 14 vissé sur un filetage à ladite première extrémité de la tige 10 et des ressorts de rappel 13.

A une seconde extrémité, la tige 10 comporte un filetage sur lequel se visse selon l'exemple un dispositif à écrou 21 et contre écrou 22, l'écrou 21 portant en outre une rondelle 23 solidaire de cet écrou.

Les pièces à serrer se positionnent entre une face 11a du cylindre 11 du vérin et la rondelle 23.

Un écrou de maintien de la tension 12, avec dispositif de contrôle comportant une bague 15, se visse sur un corps arrière 101 formant la tête du boulon derrière une jupe 11b du cylindre 11. Un raccord 16 d'entrée de liquide hydraulique est mis en communication avec des conduits d'amenée 18 distribuant le liquide hydraulique dans le corps 101 du boulon jusqu'à déboucher dans une face 103 d'une collerette 102 faisant face à l'arrière du cylindre 11 du vérin.

La collerette 102 constitue ainsi un piston du vérin duquel est solidaire la tige 10. Une injection de liquide hydraulique dans les conduits d'amenée pousse le cylindre 11, le liquide remplissant l'espace délimité par la face 103 et le cylindre 11 à l'intérieur de la jupe 11b entourant la collerette/piston 102.

Dans cette configuration le vérin est particulier en ce que l'amenée de liquide hydraulique se fait au travers du piston et en ce que tant le cylindre 11 que la collerette/piston 102 sont susceptibles de se déplacer, le cylindre se déplaçant tant que sa face 11a et que l'écrou 23 ne sont pas en contact avec les pièces à serrer et le piston se déplaçant en étirant la tige 10 à partir du moment où le serrage des pièces entre le cylindre 11 et l'écrou 23commence.

Pour permettre un serrage de plusieurs boulons équipés du dispositif, un raccord de sortie 17 reçoit un retour de fluide hydraulique sortant de l'interface entre le corps du boulon et le vérin par un conduit 19.

Les raccords d'entrée 16 et de sortie 17 sont selon l'exemple montés sur des tourelles 20a, 20b rotatives.

Les tourelles sont selon l'exemple disposées selon un axe longitudinal perpendiculaire au corps du boulon et libres en rotation autour de leur axe longitudinal alors que les raccords sont eux mêmes orientés à 90°de l'axe des tourelles ce qui permet d'orienter les raccords angulairement par rapport à l'axe du boulon.

Le boulon hydraulique est basé sur le fonctionnement d'un vérin standard, le cylindre 11 du vérin assurant la fonction de la vis d'un boulon.

La fixation est ici réalisée entre le cylindre du vérin et l'écrou 21.

Un réglage préalable de la distance D entre la tête de boulon et l'écrou repérée en figure 2b est réalisé avant l'installation du boulon. La distance D est définie pour être compatible avec la course du vérin, par exemple 5mm et cette distance une fois réglée permet un serrage sans intervention manuelle jusqu'au positionnement de l'écrou de maintien de la tension 12.Lors de la mise en pression du vérin, le cylindre 11 se déplace pour venir en contact avec les pièces à serrer entre le cylindre et l'écrou puis un effort de pression est généré qui déclenche par réaction l'allongement de la tige 10 du fait de la poussée sur le corps arrière 101.

Ces mouvements génèrent entre la jupe 11b du cylindre et l'écrou de maintien de la tension 12 un jeu correspondant à la course de mise au contact du cylindre avec les pièces à serrer et à l'allongement de la tige. Cet écrou 12 est alors ramené au contact avec la jupe 11b du cylindre 11 ce qui bloque le boulon en maintenant l'allongement de la tige 10. Le boulon est ainsi verrouillé mécaniquement par mise au contact de l'écrou de maintient de la tension sur le cylindre du vérin.

L'opération de mise en place de l'écrou de maintien est une opération sensible. Sous 700 bars de pression l'allongement de la tige 10 est de l'ordre de 0,2mm pour une tige de diamètre 30 mm ce qui implique la nécessité d'un positionnement parfaitement au contact de l'écrou de maintien en tension 12.

Le boulon hydraulique intègre un dispositif de contrôle et de visualisation de positionnement correct du boulon.

Le dispositif de visualisation comporte des lumières 30a comme représenté aux figures 4A et 4B permettant la bonne mise en place de l'écrou de maintien de la tension qui correspond a un repère coloré 30b qui n'apparaît dans les lumières 30a que lorsque le déplacement de l'écrou 12 est suffisant.

Ce dispositif de contrôle est conçu pour permettre de bloquer l'écrou de maintien de la tension, de visualiser son blocage et pour visualiser un défaut de blocage si la surface de blocage de l'écrou 12 sur la jupe 11b est polluée par un corps étranger de type copeau 25 comme représenté à la figure 5B.

Le fonctionnement repose sur l'usage de moyens d'accouplement débrayables entre l'écrou de maintien de la tension 12 et la bague 15. Ces moyens sont conçus pour permettre à la bague d'entraîner l'écrou en l'absence d'effort résistant et en particulier jusqu'à ce que la jupe 11b vienne en contact avec la face avant de l'écrou 12.

Une fois l'écrou 12 en contact avec la jupe 11b, les moyens d'accouplement, ici selon l'exemple non limitatif un système à billes 32 poussées par des ressorts 33 et reçues dans des logements 31, sont débrayés. Dans l'exemple représenté, les billes repoussent les ressorts et sortent des logements, ce qui permet à la bague de tourner sur l'écrou jusqu'à mettre un repère 30b de mise en position correcte en face d'une fenêtre 30a comme représenté en figure 5A.

Dans le cas où un débris tel qu'un copeau se coince entre la bague 15 et la jupe 11b comme représenté en figure 5B, la bague se bloque et l'écrou 12 ne vient pas en contact avec la jupe 11b. Dans ce cas, les moyens d'accouplement ne peuvent être débrayés et le repère de correcte mise en position n'apparaît pas dans la fenêtre 30a.

Une fois l'écrou de maintien de la tension mis au contact contre la jupe 11b du cylindre 11 du vérin, il est alors possible de libérer la pression dans le circuit hydraulique tout en maintenant l'allongement de la tige.

Selon l'exemple représenté aux figures 2A à 2C, la mise en oeuvre du dispositif est réalisée par basculement des boulons 1. Selon cet exemple, les pièces à serrer 41, 42 à serrer sont pourvues de découpes 43, 44 formées par une découpe cylindrique de type alésage prolongée sur un côté pour former un créneau à fond arrondi permettant de positionner le boulon latéralement avec le contre écrou 21 déjà monté en position.

Selon la figure 2A, le boulon 1 est positionné dans un premier support 50 pourvu d'une lumière oblongue recevant les axes 201 en bout des tourelles 20a, 20b portant les raccords d'entrée/sortie 16, 17.

Selon la figure 2B, le boulon est manoeuvré en rotation pour venir se positionner parallèlement aux créneaux 43, 44 des pièces 41, 42 à serrer. Le boulon a vu au préalable son dispositif écrou 21, contre écrou 22 et rondelle 23 positionné pour avoir une cote D entre la face 11a du cylindre et la rondelle 23 de l'écrou 21. La cote D prend en compte les jeux nécessaires à l'enclenchement du dispositif et permet de supprimer toute manipulation au niveau de l'écrou/contre écrou.

Selon la figure 2C, le boulon est mise en position et s'encliquette dans un collier ressort 51 pour permettre le serrage des pièces.

La figure 3 représente des pièces 41, 42 munies d'une pluralité de créneaux 43, 44 pour leur fixation.

En position d'attente inclinée, le boulon 1a est retenu au niveau de sa tige 10 par une pince 52.

Cette figure permet de voir les boulons reliés à des circuits hydrauliques de pression sous les repères généraux 61, 62, 63 avec des indices a, b, c. Selon l'exemple trois circuits indépendants relient chacun plusieurs boulons par leurs branches 61a, 61b, 61c, 62a, 62b, 63a, 63b, ... ce qui permet d'alterner les circuits de pression et d'équilibrer les pressions dans les boulons alimentés par le même circuit et de pallier à un circuit de pression défaillant.

Par conception, un tel dispositif de serrage est réversible puisqu'il suffit de remettre le boulon sous pression, de dévisser l'écrou de maintien 12 puis de relâcher la pression pour démonter le boulon.

Selon la figure 3, le boulon 1d est en reçu dans son collier ressort 51 en position de serrage alors que les autres boulons visibles sont en position d'attente retenus dans des deuxièmes supports 52 d'accrochage temporaire.

Le dispositif de l'invention permet de réaliser une opération de serrage sans présence opérateur et/ou une meilleur ergonomie du fait de la réduction des efforts nécessaires pour les opérateurs et d'un assemblage sans outillage. Il permet une bonne maîtrise de la précision et une répétabilité de la tension résiduelle. Il permet en outre un allongement de la durée de vie des dispositifs d'assemblage, grâce au serrage en tension, le contrôle de la tension résiduelle; un serrage sécurisé, permettant de revenir à un état stable (ouverture de la liaison) à partir de tout cas dégradé (coincement, dégradation, incendie,...); de prévenir les erreurs de manipulation et d'optimiser les temps opératoires.

Le concept de mise en oeuvre par basculement permet d'optimiser les temps opératoires et les temps d'exposition aux environnements agressifs, la manipulation de la pompe hydraulique réalisant la mise en tension est réalisée à distance.

Cette optimisation est obtenue par le fait que le serrage ne nécessite aucune intervention au niveau de l'écrou du boulon et que l'opération se déroule sans nécessité d'outils complémentaires tels que des clés ou autres.

Par l'ajout d'une motorisation du basculement et du positionnement des boulons ainsi qu'une motorisation du positionnement de l'écrou de maintien de la tension 12, l'opération de serrage peut être réalisée sans présence opérateur.

L'ergonomie et la mise en oeuvre de ce type de matériel est amélioré dans le sens ou les opérateurs qui interviennent n'ont besoin d'aucun matériel.

Par ailleurs, le support de boulons basculant est étudié pour reprendre les charges lors de la manipulation.

La solution permet d'éliminer intégralement le serrage au couple et les incertitudes importantes liées au frottement. La tension résiduelle obtenue dans la tige est générée uniquement par de la traction pure et donc la tension est maitrisée, précise et répétable.

La mise en oeuvre de liaisons visées à des niveaux de couple importants génère des risques de dégradation du filetage et de ce fait des risques de coincement.

Le boulon hydraulique supprime l'intégralité de ces risques liés essentiellement au mode de serrage par couple.

Le boulon hydraulique intègre un dispositif visualisation de la bonne mise en place de l'écrou de maintien de la tension résiduelle.

Ce dispositif couplé à un contrôle de pression entrant et sortant permet de valider que la tension résiduelle dans la tige est conforme.

Le boulon hydraulique de l'invention est conçu pour intégrer des dispositifs de sécurité permettant de revenir en état stable (ouverture de la liaison) à partir d'un état dégradé (coincement, dégradation par incendie,...).

Notamment il est possible de desserrer le boulon du fait que la tête comporte une zone ou surface de prise angulaire 34 représentée en figure 1 et en figure 4B, cette zone étant en figure 4B réalisée par un carré. Ainsi il est possible en retenant le boulon par le carré 34 de le desserrer en tournant le contre écrou 22 puis l'écrou 21 dans un sens de dévissage.

Les erreurs de manipulation ainsi que de nombreux risques sont également intégrés dans les dispositifs de sécurité (contrôle de mauvaise mise en place de l'écrou de maintien de la tension résiduelle, impossibilité de mise en place de l'écrou de maintien en présence de pollution).

Dans certains environnements sensibles (risques d'incendie) il est possible de faire fonctionner le boulon basculant non pas à l'huile mais à l'eau glycolée.

Le dispositif de l'invention peut être adapté à toute l'industrie et à tous les domaines concernés par des besoins de serrage à des niveaux de tension ou de couples importants : automobile, ferroviaire, maritime..., il est particulièrement adapté à une mise en oeuvre sur des brides.

Sa capacité à fonctionner en milieux agressifs y compris en milieu sous-marin associé à son niveau de sécurité et son ergonomie et notamment temps de manipulation réduit, faible exposition des opérateurs le rend particulièrement adapté à des environnements dangereux et difficiles d'accès comme par exemple les domaines du nucléaire, chimique, gaz, pétrole, éoliennes, conduites sous-marines.

## Revendications

1. Boulon d'assemblage et de serrage à mise en oeuvre en tension comportant une tige (10) et une tête (101), pour lequel la tête (101), située à une première extrémité de la tige (10), est pourvue d'un moyen de mise en tension de serrage à vérin hydraulique (11, 102) monté à demeure sur le boulon, le serrage se faisant entre un dispositif d'épaulement arrière (21, 22, 23) et le vérin hydraulique, le dispositif d'épaulement arrière étant disposé à une seconde extrémité de la tige, le vérin comportant un cylindre (11) en regard du dispositif d'épaulement arrière, le serrage de pièces se faisant entre une face arrière annulaire (11a) du cylindre et le dispositif d'épaulement arrière et pour lequel le boulon comporte un dispositif (12) de blocage de la tension de serrage une fois le vérin du moyen de mise en tension actionné, **caractérisé en ce qu'**il comporte des moyens d'accouplement débrayables entre le dispositif de blocage de la tension (12) et une bague (15) d'entrainement de ce dispositif, lesdits moyens étant conçus pour permettre à la bague d'entraîner le dispositif en l'absence d'effort résistant.

2. Boulon d'assemblage selon la revendication 1 pour lequel le dispositif d'épaulement comporte au moins un écrou d'arrêt (21), la tige étant pourvue d'un filetage (110) de réception dudit écrou d'arrêt sur une partie d'au moins ladite seconde extrémité.

3. Boulon d'assemblage selon la revendication 1 ou 2 pour lequel la tête comporte une zone de prise angulaire (34) formant surface d'appui d'un moyen de desserrage du boulon.

4. Boulon d'assemblage selon l'une quelconque des revendications 1 à 3 pour lequel le vérin comporte un piston (102) formé par une collerette sur la tige (10).

5. Boulon d'assemblage selon l'une quelconque des revendications précédentes pour lequel le vérin comporte une alimentation hydraulique (18, 19) débouchant dans une face (103) du piston en regard d'une face interne du cylindre entourée par une première jupe (11b) entourant elle même de manière étanche le piston (102).

6. Boulon d'assemblage selon l'une quelconque des revendications précédentes pour lequel le cylindre (11) comporte un corps de cylindre annulaire (11c) monté coulissant sur la tige (10) et muni de moyens d'étanchéité entre la tige et le cylindre.

7. Boulon d'assemblage selon la revendication 6 pour lequel des ressorts (13) de rappel du cylindre sont disposés entre un flasque (14) vissé sur la tige (10) et une face arrière du corps de cylindre.

8. Boulon d'assemblage selon la revendication 7 pour lequel ladite face arrière (11a) du cylindre est annulaire et constituée par l'extrémité libre d'une second jupe partant du corps de cylindre et entourant les ressorts (13).

9. Boulon d'assemblage selon l'une quelconque des revendications précédentes pour lequel le moyen de mise en tension de serrage à vérin hydraulique (11, 102) est relié à une tuyauterie d'une source hydraulique au moyen de raccords (16,17) montés sur des tourelles (20a, 20b) rotatives.

10. Boulon d'assemblage selon la revendication 9 pour lequel les tourelles sont disposées selon un axe longitudinal perpendiculaire au corps du boulon et libres en rotation autour de leur axe longitudinal alors que les raccords sont eux mêmes orientés à 90° de l'axe des tourelles ce qui permet d'orienter les raccords angulairement par rapport à l'axe du boulon.

11. Boulon d'assemblage selon l'une quelconque des revendications précédentes pour lequel le boulon hydraulique intègre un dispositif de contrôle et de visualisation de positionnement correct du boulon.

12. Boulon d'assemblage selon la revendication 11 pour lequel le dispositif de visualisation comporte au moins une lumière (30a) sur la bague et un repère coloré (30b) sur l'écrou (12) la lumière et le repère étant positionnés pour que ce dernier n'apparaisse dans la lumière que pour un déplacement de l'écrou (12) suffisant.

13. Dispositif d'assemblage comportant au moins un boulon selon l'une quelconque des revendications précédentes pour lequel le boulon est reçu dans un premier support (50) à rainures permettant une rotation du boulon et une translation du boulon parallèlement à lui même.

14. Dispositif d'assemblage selon la revendication 13 comportant un deuxième support (52) d'accrochage temporaire du boulon dans une position d'attente.

15. Dispositif d'assemblage selon la revendication 13 ou 14 comportant un troisième support (51) de type pince ressort retenant le boulon dans une position de mise en oeuvre.

16. Système d'assemblage comportant une pluralité de dispositifs d'assemblage selon l'une quelconque des revendications 13 à 15 pour lequel les boulons des dispositifs d'assemblage sont reliés par groupes alternés à des sources de pression séparées.

17. Procédé d'assemblage de pièces au moyen d'au moins d'un boulon selon l'une quelconque des revendications 1 à 12 pour lequel
- on règle une distance D entre la tête de boulon et le dispositif d'épaulement arrière,
- on met en place le boulon,
- on met le boulon sous pression hydraulique en sorte de serrer les pièces à fixer entre la tête et le dispositif d'épaulement arrière;
- on bloque mécaniquement le boulon par serrage d'un dispositif (12) de blocage de la tension de serrage.

18. Procédé selon la revendication 17 pour lequel le dispositif comportant un repère de correct serrage, on tourne une bague du dispositif de blocage de la tension de serrage jusqu'à apparition dudit repère.

## Patentansprüche

1. Verbindungs- und Spannbolzen zum Festspannen, aufweisend einen Schaft (10) und einen Kopf (101), wobei der Kopf (101), der sich an einem ersten Ende des Schafts (10) befindet, mit einem Verspannmittel mit Hydraulikstellglied (11, 102) ausgestattet ist, das auf Dauer auf dem Bolzen angebracht ist, wobei das Spannen zwischen einem hinteren Ansatzmittel (21, 22, 23) und dem Hydraulikstellglied erfolgt, wobei das hintere Ansatzmittel an einem zweiten Ende des Schafts angeordnet ist, wobei das Stellglied einen Zylinder (11) gegenüber dem hinteren Ansatzmittel aufweist, wobei das Spannen von Teilen zwischen einer ringförmigen Rückseite (11a) des Zylinders und dem hinteren Ansatzmittel erfolgt und wofür der Bolzen eine Blockiervorrichtung (12) der Verspannung aufweist, sobald das Stellglied des Verspannmittels betätigt ist, **dadurch gekennzeichnet, dass** er lösbare Kopplungsmittel zwischen der Blockiervorrichtung der Spannung (12) und einem Antriebsring (15) dieser Vorrichtung aufweist, wobei die Mittel ausgebildet sind, um dem Ring zu erlauben, die Vorrichtung bei Abwesenheit einer resistiven Kraft anzutreiben.

2. Verbindungsbolzen nach Anspruch 1, wobei das Ansatzmittel mindestens eine Feststellmutter (21) aufweist, wobei der Schaft mit einem Empfangsgewinde (110) der Feststellmutter auf mindestens einem Teil des zweiten Endes ausgestattet ist.

3. Verbindungsbolzen nach Anspruch 1 oder 2, wobei der Kopf eine winkelige Eingriffzone (34) aufweist, welche eine Stützfläche eines Lösemittels des Bolzens bildet.

4. Verbindungsbolzen nach einem der Ansprüche 1 bis 3, wobei das Stellglied einen Kolben (102) aufweist, der von einem Kragen auf dem Schaft (10) gebildet ist.

5. Verbindungsbolzen nach einem der vorangehenden Ansprüche, wobei das Stellglied eine Hydraulikversorgung (18, 19) aufweist, die in einer Seite (103) des Kolbens gegenüber einer Innenseite des Zylinders ausmündet, umgeben von einer ersten Schürze (11b), die wiederum den Kolben (102) dicht umgibt.

6. Verbindungsbolzen nach einem der vorangehenden Ansprüche, wobei der Zylinder (11) einen ringförmigen Zylinderkörper (11c) aufweist, der auf dem Schaft (10) gleitend angebracht und mit Dichtungsmitteln zwischen dem Schaft und dem Zylinder ausgestattet ist.

7. Verbindungsbolzen nach Anspruch 6, wobei Rückstellfedern (13) des Zylinders zwischen einem auf dem Schaft (10) geschraubtem Flansch (14) und einer Rückseite des Zylinderkörpers angeordnet sind.

8. Verbindungsbolzen nach Anspruch 7, wobei die Rückseite (11a) des Zylinders ringförmig und von dem freien Ende einer zweiten Schürze gebildet ist, die von dem Zylinder ausgeht und die Federn (13) umgibt.

9. Verbindungsbolzen nach einem der vorangehenden Ansprüche, wobei das Verspannmittel mit Hydraulikstellglied (11, 102) mit einem Rohrleitungssystem einer Hydraulikquelle mit Hilfe von Anschlüssen (16, 17) verbunden ist, die auf Rotationstürmen (20a, 20b) angebracht sind.

10. Verbindungsbolzen nach Anspruch 9, wobei die Türme gemäß einer Längsachse, die senkrecht zum Körper des Bolzens angeordnet ist, und frei drehend um ihre Längsachse angeordnet sind, wogegen die Anschlüsse wiederum in 90° zur Achse der Türme ausgerichtet sind, was erlaubt, die Anschlüsse winklig im Verhältnis zur Achse des Bolzens auszurichten.

11. Verbindungsbolzen nach einem der vorangehenden Ansprüche, wobei der Hydraulikbolzen eine Kontroll- und Visualisierungsvorrichtung der richtigen Positionierung des Bolzens integriert.

12. Verbindungsbolzen nach Anspruch 11, wobei die Visulisierungsvorrichtung mindestens einen Schlitz (30a) auf dem Ring und eine farbige Markierung (30b) auf der Mutter (12) aufweist, wobei der Schlitz und die Markierung positioniert sind, damit diese nur für eine ausreichende Verlagerung der Mutter (12) in dem Schlitz erscheint.

13. Verbindungsvorrichtung, aufweisend mindestens einen Bolzen nach einem der vorangehenden Ansprüche, wobei der Bolzen in einem ersten Halter (50) mit Rillen aufgenommen ist, der eine Rotation des Bolzens und eine Verlagerung des Bolzens parallel zu sich selbst erlaubt.

14. Verbindungsvorrichtung nach Anspruch 13, aufweisend einen zweiten temporären Befestigungshalter (52) des Bolzens in einer Warteposition.

15. Verbindungsvorrichtung nach Anspruch 13 oder 14, aufweisend einen dritten Halter (51) vom Typ Federklemme, der den Bolzen in einer Durchführungsposition hält.

16. Verbindungssystem, aufweisend eine Vielzahl von Verbindungsvorrichtungen nach einem der Ansprüche 13 bis 15, wobei die Bolzen der Verbindungsvorrichtungen in abwechselnden Gruppen mit separaten Druckquellen verbunden sind.

17. Verbindungsverfahren von Teilen mit Hilfe von mindestens einem Bolzen nach einem der Ansprüche 1 bis 12, wobei
- der Abstand D zwischen dem Bolzenkopf und dem hinteren Ansatzmittel eingestellt wird,
- der Bolzen platziert wird,
- der Bolzen hydraulisch unter Druck versetzt wird, so dass die zu befestigenden Teile zwischen dem Kopf und dem hinteren Ansatzmittel befestigt werden,
- der Bolzen durch Spannen einer Blockiervorrichtung (12) der Verspannung mechanisch blockiert wird.

18. Verfahren nach Anspruch 17, wobei, wobei die Vorrichtung eine Markierung der richtigen Spannung aufweist, ein Ring der Blockiervorrichtung der Verspannung bis zum Erscheinen der Markierung gedreht wird.

## Claims

1. An assembly and clamping bolt to be used under tension including a shank (10) and a head (101) wherein the head (101), situated at a first end of the shank (10), includes hydraulic actuator tightening tensioning means (11, 102) permanently mounted on the bolt, tightening being effected between a rear shoulder device (21, 22, 23) and the hydraulic actuator, the rear shoulder device being disposed at a second end of the shank, the actuator including a cylinder (11) facing the rear shoulder device, parts being clamped between an annular rear face (11a) of the cylinder and the rear shoulder device, and wherein the bolt includes a device (12) for locking the tightening tension once the actuator of the tensioning means has been actuated, **characterized in that** it includes releasable coupling means between the device (12) for locking the tension and a ring (15) for driving that device, said means being designed to allow the ring to drive the device in the absence of resisting force.

2. The assembly bolt as claimed in claim 1 wherein the shoulder device includes at least one stop nut (21), the shank including a thread (110) receiving said stop nut over at least a part of said second end.

3. The assembly bolt as claimed in claim 1 or 2 wherein the head includes an angular engagement area (34) forming a bearing surface for means for loosening the bolt.

4. The assembly bolt as claimed in any one of claims 1 to 3 wherein the actuator includes a piston (102) formed by a flange on the shank (10).

5. The assembly bolt as claimed in any one of the preceding claims, wherein the actuator includes a hydraulic feed (18, 19) discharging into a face (103) of the piston facing an internal face of the cylinder surrounded by a first skirt (11b) itself surrounding the piston (102) in sealed manner.

6. The assembly bolt as claimed in any one of the preceding claims wherein the cylinder (11) includes an annular cylinder body (11c) mounted to slide on the shank (10) and including sealing means between the shank and the cylinder.

7. The assembly bolt as claimed in claim 6 wherein return springs (13) of the cylinder are disposed between a flange (14) screwed to the shank (10) and a rear face of the cylinder body.

8. The assembly bolt as claimed in claim 7 wherein said rear face (11a) of the cylinder is annular and consists of the free end of a second skirt extending from the cylinder body and surrounding the springs (13).

9. The assembly bolt as claimed in any one of the preceding claims wherein the hydraulic actuator tightening tensioning means (11, 102) are connected to a pipe from a hydraulic source by means of connectors (16, 17) mounted on rotary turrets (20a, 20b).

10. The assembly bolt as claimed in Claim 9 wherein the turrets are disposed along a longitudinal axis perpendicular to the body of the bolt and free to rotate about their longitudinal axis whereas the connectors are themselves oriented at 90° to the axis of the turrets which makes it possible to orient the connectors angularly relative to the axis of the bolt.

11. The assembly bolt as claimed in any one of the preceding claims, wherein the hydraulic bolt integrates a device for verifying and showing correct positioning of the bolt.

12. The assembly bolt as claimed in claim 11 wherein the display device includes at least one opening (30a) on the ring and a colored marker (30b) on the nut (12), the opening and the marker being positioned so that the latter appears in the opening only for a sufficient movement of the nut (12).

13. An assembly device including at least one bolt as claimed in any one of the preceding claims wherein the bolt is received in a grooved first support (50) allowing rotation of the bolt and movement in translation of the bolt parallel to itself.

14. The assembly device as claimed in claim 13 including a second support (52) for temporary retention of the bolt in a waiting position.

15. The assembly device as claimed in claim 13 or 14 including a spring clamp type third support (51) for retaining the bolt in an operating position.

16. An assembly system including a plurality of assembly devices as claimed in any one of claims 13 to 15 wherein the bolts of the assembly devices are connected in alternating groups to separate pressure sources.

17. A method of assembling parts by means of at least one bolt as claimed in any one of claims 1 to 12 wherein
- a distance D between the bolt head and the rear shoulder device is adjusted,
- the bolt is put in place,
- the bolt is put under hydraulic pressure so as to clamp the parts to be fixed between the head and the rear shoulder device,
- the bolt is mechanically locked by tightening a tightening tension locking device (12).

18. The method as claimed in claim 17 wherein, the device including a correct tightening marker, a ring of the tightening tension locking device is turned until said marker appears.
